# NOUVEAU FASCICULE DE BREVET EUROPEEN

(11) **EP 0 328 169 B2**
(45) Date de publication et mention de la décision concernant l'opposition: **11.07.2001**
(45) Mention de la délivrance du brevet: 03.11.1993
(21) Numéro de dépôt: 89200067.0
(22) Date de dépôt: 13.01.1989
(51) Int. Cl.: C01B 15/12, C11D 3/395

(54) **Procédé de fabrication de perborate de sodium monohydraté, perborate de sodium monohydraté partiellement cristallisé et poudres à lessiver les textiles**
Verfahren zur Herstellung von Natriumperboratmonohydrat, teilweise kristallisiertes Natriumperboratmonohydrat und Textilwaschpulver
Process for manufacturing sodium perborate monohydrate, partially crystallized sodium perborate monohydrate and textile washing powders

(30) Priorité: 26.01.1988 IT 1921188
(43) Date de publication de la demande: 16.08.1989
(73) Titulaire: INTEROX CHIMICA S.p.A., I-57013 Rosignano-Solvay (LI) (IT)
(72) Inventeur: Reginato, Luigi, I-57013 Rosignano-Solvay Livorno (IT)
(74) Mandataire: Anthoine, Paul

(56) Documents cités:
- EP-A- 0 194 952
- ES-A- 555 609
- FR-A- 2 207 859
- FR-A- 2 285 339

## Description

L'invention concerne un procédé pour la fabrication de perborate de sodium monohydraté par déshydratation de perborate de sodium tétrahydraté.

Le perborate de sodium monohydraté, de formule brute NaBO₃.H₂O, trouve un débouché important dans la préparation des poudres à lessiver, du fait de sa teneur importante en oxygène actif et de sa grande vitesse de dissolution dans l'eau.

Une technique communément utilisée pour obtenir du perborate de sodium monohydraté consiste à déshydrater du perborate de sodium tétrahydraté (de formule brute NaBO₃.4 H₂O) en lit fluidisé, au moyen d'un courant d'air chaud. Dans les procédés connus conformes à cette technique, on a généralement recherché des conditions opératoires qui permettent d'obtenir du perborate de sodium monohydraté de dureté élevée, de manière qu'il présente une haute résistance à l'attrition. A cet effet, dans le procédé décrit dans le brevet BE-A-718160 (SOLVAY & Cie), on utilise de l'air ambiant, préchauffé à une température d'au moins 180°C, de préférence comprise entre 180 et 210°C. L'utilisation de températures aussi élevées est toutefois onéreuse et elle implique de prendre des précautions compte tenu du caractère oxydant du perborate de sodium.

Dans le brevet BE-A-807724 (PEROXID-CHEMIE GmbH), on préconise d'utiliser de l'air chaud et humide, dont la température et le degré hygrométrique sont réglés, à l'entrée du lit, pour que la température de l'air, à la sortie du lit, soit d'au moins 60°C, de manière à provoquer une fusion superficielle du perborate de sodium. Le perborate de sodium monohydraté obtenu par ce procédé connu présente la particularité que sa teneur en oxygène actif décroît rapidement lorsqu'il est exposé à l'air atmosphérique ambiant. Cette particularité constitue un inconvénient sérieux, car elle implique de prendre des mesures particulières pour stocker ou manutentionner le perborate de sodium monohydraté et elle conduit par ailleurs à une dégradation rapide des propriétés lessivielles des poudres à lessiver.

L'invention vise à remédier aux inconvénients des procédés connus, en fournissant un procédé nouveau qui permet d'obtenir, par déshydratation de perborate de sodium tétrahydraté, du perborate de sodium monohydraté présentant simultanément une haute résistance à l'attrition et une bonne stabilité en ce qui concerne sa teneur en oxygène actif.

L'invention concerne dès lors un procédé pour la production de perborate de sodium monohydraté par déshydratation d'un lit de perborate de sodium tétrahydraté dans un courant d'air. Selon l'invention, on met en oeuvre un courant d'air qui est d'abord humide dans une première phase de la déshydratation, puis sec dans une deuxième phase de la déshydratation, l'humidité absolue de l'air dans la deuxième phase étant inférieure à celle de la première phase, ledit procédé étant mis en oeuvre dans une succession de deux réacteurs en série dont le premier est alimenté avec un air plus humide et le suivant avec l'air sec.

Dans le procédé selon l'invention, l'air mis en oeuvre à l'entrée du lit de perborate de sodium tétrahydraté est de l'air chaud dont la température est généralement supérieure à 60 ° C et, de préférence, au moins égale à 80°C; il est souhaitable que sa température n'excède pas 180°C. Les températures comprises entre 90 et 150°C sont les plus adéquates.

Le débit de l'air à mettre en oeuvre dépend de divers paramètres, parmi lesquels figurent notamment la granulométrie du perborate de sodium tétrahydraté, le volume du lit et l'aire de sa section ainsi que la masse spécifique recherchée pour le perborate de sodium monohydraté; il doit être réglé pour assurer un lit fluidisé stable pendant toute la durée de la déshydratation. En pratique, le débit de l'air, à l'entrée du lit, peut par exemple être fixé entre 0,5 et 30 Nm³ par heure et par kg de perborate de sodium tétrahydraté, les valeurs comprises entre 1 et 20 Nm³ étant les plus adéquates dans la majorité des cas.

L'air sec est par définition de l'air anhydre ou, plus généralement, de l'air prélevé dans l'ambiance, dont la pression partielle de vapeur d'eau n'excède pas la tension de vapeur saturante dans les conditions normales de pression et de température; il est dès lors, le plus souvent, de l'air ambiant présentant une humidité relative comprise entre 40 et 100 % dans les conditions normales de pression atmosphérique et de température.

L'air humide mis en oeuvre à la première phase de la déshydratation est de l'air dont l'humidité absolue est supérieure à celle de l'air sec mis en oeuvre à la deuxième phase de la déshydratation. Selon l'invention, on peut avantageusement utiliser de l'air humide dont la teneur en humidité est supérieure à celle correspondant à la tension de vapeur saturante de l'air ambiant dans les conditions normales de pression atmosphérique et de température. Il convient toutefois que la quantité totale d'eau dans l'air humide à l'entrée du lit soit inférieure à celle correspondant à la tension de vapeur saturante de l'air à la température qu'il a à la sortie du lit. La valeur optimum de la quantité totale d'eau dans l'air humide mis en oeuvre dans la première phase de la déshydratation dépend dès lors des autres conditions opératoires telles que la température et le débit de l'air humide à l'entrée du lit et la température du lit; elle peut être déterminée aisément dans chaque cas particulier par un travail de routine au laboratoire.

Dans le procédé selon l'invention, l'importance relative de chaque phase de la déshydratation dépend de la qualité du perborate de sodium tétrahydraté mis en oeuvre et des caractéristiques recherchées pour le perborate de sodium monohydraté (notamment sa dureté et sa stabilité pour ce qui concerne sa teneur en oxygène actif). En pratique, on recommande que la durée de la première phase de la déshydratation n'excède pas 50 % de la durée totale de la déshydratation. Il est souhaitable que la durée de la première phase soit au moins égale à 2 % de la durée totale de la déshydratation, les valeurs comprises entre 5 et 40 % étant préférées.

Dans une forme d'exécution particulière du procédé selon l'invention, on règle la teneur en humidité de l'air mis en oeuvre dans chaque phase de la déshydratation pour que l'humidité relative de l'air, en équilibre thermique avec la phase solide à la sortie du lit, soit comprise entre 15 et 80 % à la première phase et entre 10 et 60 % à la deuxième phase. Des valeurs préférées pour l'humidité relative de l'air à la sortie du lit sont celles comprises entre 20 et 70 % à la première phase et entre 15 et 50 % à la deuxième phase, l'humidité relative de l'air dans la première phase étant supérieure à celle de l'air dans la deuxième phase.

Dans une forme de réalisation spécialement avantageuse du procédé selon l'invention, la température de l'air que l'on introduit dans le lit est identique dans les deux phases de la déshydratation, de sorte que la température du lit dans la première phase de la déshydratation est supérieure à celle qu'il a dans la deuxième phase.

Dans cette forme d'exécution du procédé selon l'invention, la différence entre les températures du lit dans la première phase et dans la deuxième phase de la déshydratation s'établit entre 1 et 10°C. Les valeurs comprises entre 2 et 7°C pour ladite différence sont préférées. A cet effet, on peut par exemple régler la température et l'humidité de l'air pour que la température du lit se fixe entre 45 et 85°C pendant la première phase de la déshydratation et entre 40 et 80°C pendant la deuxième phase, les températures préférées étant celles comprises entre 50 et 70°C pour la première phase et entre 45 et 65°C pour la deuxième phase, la température du lit dans la première phase étant supérieure à celle qu'il a dans la deuxième phase. On peut aisément obtenir ces températures dans le lit en fixant la température de l'air, à l'entrée du lit, entre 80 et 180°C, les températures comprises entre 90 et 150°C étant préférées. Selon une variante particulière de cette forme d'exécution du procédé selon l'invention, on préfère sélectionner, pour la première phase de la déshydratation, une température de lit qui soit inférieure à celle habituellement appelée "température de fusion" du perborate de sodium, qui n'excède généralement pas 65°C. Dans cette variante du procédé, les températures préférées pour le lit sont celles comprises entre 52 et 62°C dans la première phase de la déshydratation et entre 50 et 60°C dans la deuxième phase.

A l'issue de la deuxième phase de la déshydratation, on observe généralement une hausse de la température du lit, ce qui est une indication de la fin de la déshydratation du perborate de sodium du stade tétrahydraté au stade monohydraté.

Dans le procédé selon l'invention, il est généralement avantageux de faire précéder la première phase de la déshydratation par une étape de mise à température du perborate de sodium tétrahydraté.

Toutes autres choses égales, les propriétés du perborate de sodium monohydraté obtenu à l'issue du procédé selon l'invention vont dépendre de celles du perborate de sodium tétrahydraté mis en oeuvre. En particulier, à conditions opératoires identiques, la résistance à l'attrition du perborate de sodium monohydraté est généralement d'autant meilleure que celle du perborate de sodium tétrahydraté est bonne. Il est dès lors avantageux d'utiliser du perborate de sodium tétrahydraté présentant une résistance à l'attrition élevée, caractérisée par exemple par un indice n'excédant pas 4,5 % selon la norme ISO 5937. Il est spécialement recommandé d'utiliser du perborate de sodium tétrahydraté dont l'indice de résistance à l'attrition selon la norme ISO 5937 n'excède pas 3 %, de préférence 2,5 %.

Le produit selon l'invention peut être préparé de manière discontinue dans un seul réacteur à lit fluidisé que l'on alimente successivement avec l'air humide et avec l'air sec. Le procédé selon l'invention peut être exécuté de manière continue dans une succession de deux réacteurs à lit fluidisé, dont l'un est alimenté avec l'air humide et l'autre, avec l'air sec. On peut aussi utiliser un nombre de réacteurs supérieur à deux, qui sont alimentés avec de l'air dont la teneur en humidité va en décroissant d'un réacteur au suivant. Dans cette dernière variante du procédé selon l'invention, on peut aussi régler le débit de l'air pour qu'il aille en décroissant d'un réacteur au suivant.

Dans le procédé selon l'invention, le perborate de sodium monohydraté produit pendant la première phase de la déshydratation présente une prépondérance de matière amorphe, tandis que celui formé pendant la seconde phase de la déshydratation est en majeure partie à l'état cristallin. Le perborate de sodium obtenu au moyen du procédé selon l'invention comporte dès lors un mélange de matière cristalline et de matière amorphe qui ont été mises en évidence par la méthode de diffraction des rayons X. Il combine une résistance élevée à l'attrition et une bonne stabilité caractérisée par une vitesse modérée de sa perte en oxygène actif au cours du temps. Sans vouloir être liée par une explication théorique, la demanderesse pense que ces propriétés supérieures du perborate de sodium monohydraté seraient imputables à la structure morphologique de ses grains, qui comporteraient un noyau cristallin dans une enveloppe à l'état amorphe. La bonne stabilité précitée du perborate de sodium monohydraté serait dès lors le résultat de la nature cristalline de son noyau, tandis que la dureté supérieure de son enveloppe amorphe lui conférerait sa résistance élevée à l'attrition. Par ailleurs, au départ de perborate de sodium tétrahydraté de qualité égale, le procédé selon l'invention permet d'obtenir du perborate de sodium monohydraté dont la surface spécifique est supérieure à celle obtenue avec le procédé connu décrit dans le document BE-A-807724.

L'invention concerne dès lors également du perborate de sodium monohydraté, pouvant être obtenu par le procédé selon l'invention, qui est à l'état partiellement cristallisé et qui présente une teneur en matière amorphe au maximum égale à 60 % en poids, un taux d'usure à l'attrition égal au maximum à 10 % et une stabilité correspondant à une perte pondérale en oxygène actif inférieure à 60 % de sa teneur d'origine, après 50 jours de stockage dans de l'air ambiant à 55°C.

Dans la définition qui précède du perborate de sodium monohydraté selon l'invention, le taux d'usure à l'attrition est défini selon la norme ISO 5937.

L'invention concerne en particulier du perborate de sodium monohydraté qui contient entre 20 et 60 % en poids de matière amorphe, par exemple entre 35 et 60 %, et entre 150 et 160 g d'oxygène actif par kg et qui présente un taux d'usure à l'attrition compris entre 2 et 8 % et une stabilité correspondant à une perte pondérale en oxygène actif comprise entre 20 et 55 % de sa teneur d'origine, après 50 jours de stockage dans de l'air à 55 ° C.

Une variété spécialement avantageuse du perborate de sodium monohydraté selon l'invention présente une surface spécifique inférieure à 10 m²/g, par exemple comprise entre 4 et 8 m²/g.

Grâce à sa résistance élevée à l'attrition et à sa bonne stabilité en ce qui concerne sa teneur en oxygène actif, le perborate de sodium monohydraté selon l'invention trouve un débouché intéressant dans la fabrication des poudres pour la lessive des textiles.

L'invention concerne dès lors aussi des poudres à lessiver les textiles, qui contiennent du perborate de sodium monohydraté conforme à l'invention.

L'intérêt de l'invention va être mis en évidence à la lecture des exemples d'application qui sont décrits ci-après. Dans ces exemples, l'expression "air sec" désigne de l'air prélevé dans l'ambiance, conformément à la définition qui en a été donnée plus haut. La résistance à l'attrition est définie selon la norme ISO 5937. La teneur en oxygène actif a été déterminée par titrimétrie en utilisant le permanganate de potassium et est exprimée en g de O₂ par kg de matière.

### I. Première série d'exemples (exemples 1 à 4)

Dans les exemples 1 à 4 qui suivent, on a mis en oeuvre du perborate de sodium tétrahydraté présentant les caractéristiques suivantes :

| | |
|---|---|
| - diamètre moyen des particules | 388 microns |
| - masse spécifique apparente | 0,84 kg/dm³ |
| - résistance à l'attrition | 2 % |
| - teneur en oxygène actif | 102 g/kg. |

On a chargé 2 kg du perborate de sodium tétrahydraté dans un sécheur à lit fluidisé que l'on a alimenté avec de l'air ambiant contenant 14 g de vapeur d'eau par kg, préchauffé à 100°C, à raison d'un débit de 16,5 Nm³/h.

Les exemples 1 et 2 concernent deux essais qui ont été exécutés dans des conditions conformes à l'invention. Les exemples 3 et 4 concernent des essais de référence qui ont été exécutés dans des conditions qui ne sont pas conformes au procédé selon l'invention.

### Exemple 1 (conforme à l'invention)

Le fonctionnement du lit a comporté les trois étapes successives suivantes :
Etape n ° 1 : mise à température du perborate de sodium tétrahydraté;
Etape n ° 2 : première phase de la déshydratation au moyen d'air humide;
Etape n ° 3 : deuxième phase de la déshydratation au moyen d'air sec.

Pendant l'étape n ° 1, qui a duré 7 minutes, le lit de perborate de sodium a été alimenté avec de l'air ambiant préchauffé à 100°C, comme exposé plus haut.

Pendant l'étape n ° 2, qui a duré 43 minutes, on a introduit de la vapeur d'eau dans l'air, en amont du lit.

Pendant l'étape n ° 3, qui a duré 50 minutes, on a cessé l'alimentation en vapeur d'eau, de sorte que l'air admis dans le lit était de l'air ambiant tel quel.

A l'issue de l'étape n° 3, la température du lit à crû rapidement, indiquant la fin de la conversion du perborate de sodium de la forme tétrahydratée à la forme monohydratée.

Les conditions opératoires sont mentionnées ci-dessous :

| | | |
|---|---|---|
| - Etape n ° 1 | . durée (min) | 7 |
| - Etape n ° 2 | . durée (min) | 43 |
| | . température du lit ( ° C) | 57,9 |
| | . humidité relative de l'air à la sortie du lit (%) | 46 |
| - Etape n ° 3 | . durée (min) | 50 |
| | . température du lit (°C) | 52 |
| | . humidité relative de l'air à la sortie du lit (%) | 28 |
| - Température finale du lit ( ° C) | | 66,2. |

### Exemple 2 (conforme à l'invention)

On a reproduit les conditions de l'exemple 1, sauf en ce qui concerne les durées des étapes nos. 2 et 3, qui ont été respectivement de 28 minutes (étape n ° 2) et de 70 minutes (étape n ° 3). La température du lit s'est établie approximativement aux mêmes valeurs que celles de l'exemple n°1.

### Exemple 3 (de référence)

On a reproduit les conditions de l'exemple 1, à la seule exception que l'on a omis d'introduire de la vapeur d'eau dans l'air pendant l'étape n ° 2 (première phase de la déshydratation). Le lit a dès lors été alimenté en permanence avec de l'air sec pendant 100 minutes. Pendant la déshydratation, la température du lit s'est stabilisée à 53°C et l'humidité relative de l'air à la sortie du lit s'est fixée à 28 %. A l'issue du procédé (qui a duré 100 minutes), la température du lit a crû jusqu'à 66,7°C.

### Exemple 4 (de référence)

On a modifié les conditions de l'essai de l'exemple 1, en introduisant de la vapeur d'eau dans l'air, en amont du lit, au cours des deux phases de la déshydratation (Etapes nos. 2 et 3). Pendant la déshydratation, la température du lit s'est établie à 60,5°C et l'humidité relative de l'air à la sortie du lit s'est établie à 45 %. A l'issue des 100 minutes de traitement, la température du lit a monté à 67,7°C.

On a reproduit au tableau I les caractéristiques du perborate de sodium monohydraté obtenu dans chacun des exemples 1 à 4 qui viennent d'être décrits.

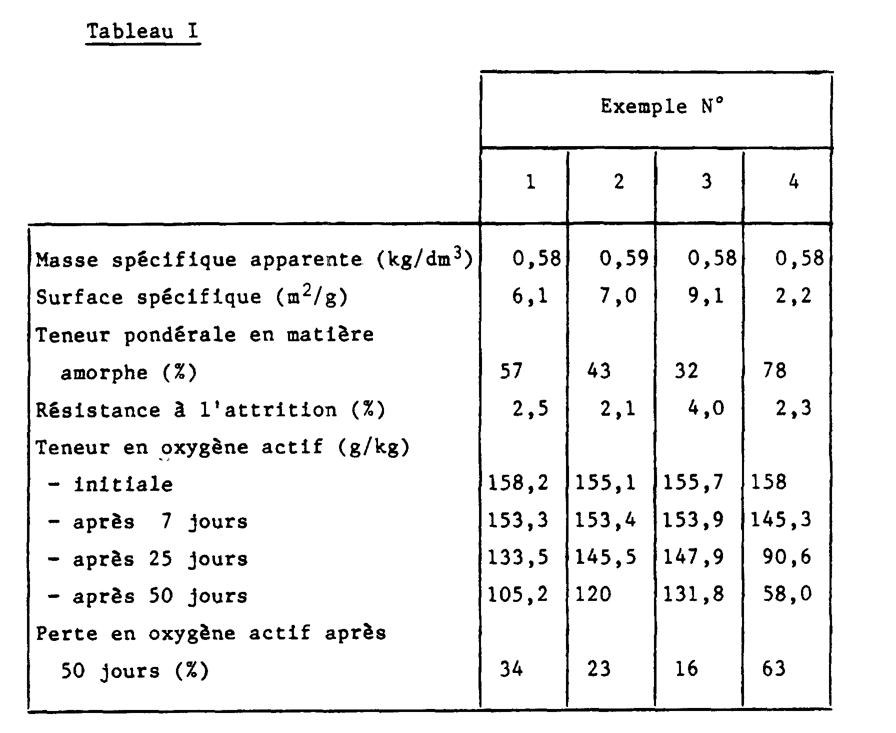

Dans le tableau I, la résistance à l'attrition a été mesurée par la méthode ISO 5937. La teneur en oxygène actif après 7, 25 et 50 jours a été déterminée après maintien du perborate de sodium monohydraté en contact avec de l'air ambiant à 55 °C.

On observe que le perborate de sodium monohydraté obtenu aux exemples 1 et 2 (conformes à l'invention) présentent un compromis optimum en ce qui concerne la résistance à l'attrition et la perte en oxygène actif.

### II. Deuxième série d'exemples (exemples 5 à 7)

Dans ces exemples, on a mis en oeuvre du perborate de sodium tétrahydraté présentant les caractéristiques suivantes :

| | |
|---|---|
| - diamètre moyen des particules | 302 microns |
| - masse spécifique apparente | 0,83 kg/dm³ |
| - résistance à l'attrition | 4,1 % |
| - teneur en oxygène actif | 102,1 g/kg. |

On a chargé 2 kg de ce perborate de sodium tétrahydraté dans le sécheur à lit fluidisé, et on a alimenté celui-ci avec de l'air ambiant contenant 16,6 g de vapeur d'eau par kg, préchauffé à 118°C, à raison d'un débit de 13,2 Nm³/h.

L'exemple 5 concerne un essai qui a été effectué dans des conditions conformes au procédé selon l'invention. Les exemples 6 et 7 concernent des essais de référence dans des conditions qui ne sont pas conformes au procédé selon l'invention.

### Exemple 5 (conforme à l'invention)

Le fonctionnement du lit à comporté les trois étapes nos. 1, 2, 3 définies plus haut à l'exemple 1; celles-ci ont été exécutées dans les conditions suivantes :

| | | |
|---|---|---|
| - Etape n° 1 | . durée (min) | 7 |
| - Etape n° 2 | . durée (min) | 43 |
| | . température du lit (°C) | 60 |
| | . humidité relative de l'air à la sortie du lit (%) | 40 |
| - Etape n° 3 | . durée (min) | 55 |
| | . température du lit (°C) | 55 |
| | . humidité relative de l'air à la sortie du lit (%) | 30 |
| - Température finale du lit (°C) | | 67. |

### Exemple 6 (de référence)

On a reproduit les conditions de l'exemple 5, sauf que l'on a omis d'introduire de la vapeur d'eau dans l'air, pendant l'étape n ° 2. La durée totale du traitement dans le réacteur à lit fluidisé a par ailleurs été de 105 minutes, pendant lesquelles le lit a dès lors été alimenté avec de l'air sec exclusivement. La température du lit s'est stabilisée à 53,5°C et l'humidité relative de l'air à la sortie du lit s'est stabilisée à 28 %. A l'issue de la déshydratation, la température du lit s'est élevée à 66°C.

### Exemple 7 (de référence)

On a modifié les conditions de l'essai de l'exemple 5, en mettant en oeuvre de l'air ambiant, dans lequel on a par ailleurs introduit un surplus de vapeur d'eau pendant la totalité du traitement de déshydratation qui a duré 108 minutes. Pendant la déshydratation, la température du lit s'est établie à 61,5°C et l'humidité relative de l'air à la sortie du lit s'est établie à 40 %. A l'issue de la déshydratation, la température du lit s'est haussée à 66°C.

On a consigné au tableau II les caractéristiques du perborate de sodium monohydraté obtenu dans chacun des exemples 5 à 7.

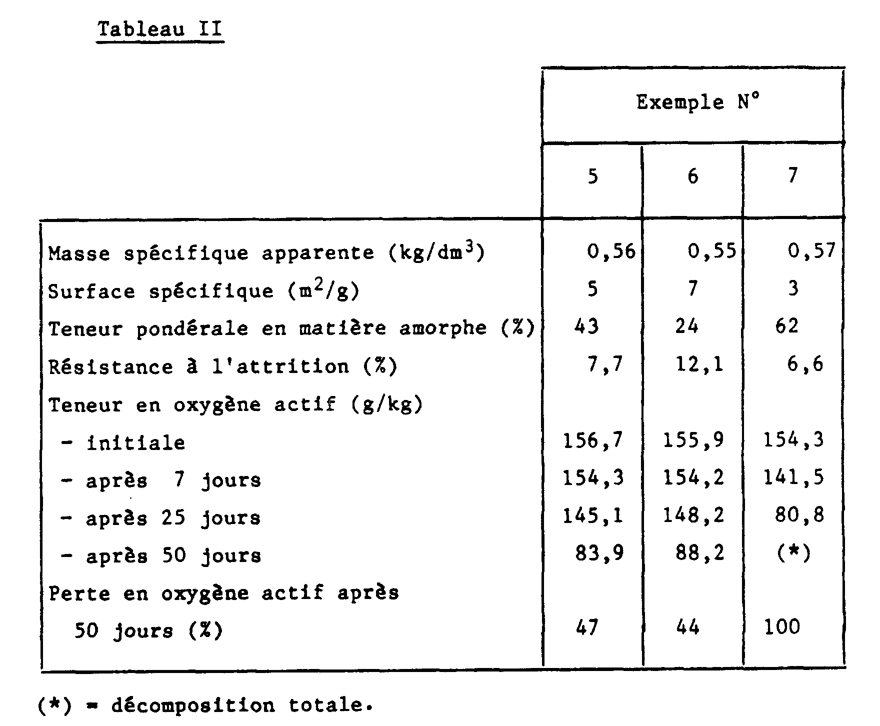

Une comparaison des résultats des exemples 5, 6 et 7 montre que le perborate de sodium monohydraté de l'exemple 5 (conforme à l'invention) combine des caractéristiques optimum de résistance à l'attrition et de stabilité pour ce qui concerne la teneur en oxygène actif.

Dans les essais qui viennent d'être décrits aux exemples 1 à 7, la surface spécifique a été mesurée au moyen de la méthode BET basée sur la détermination des isothermes d'adsorption et de désorption d'azote (Journal of the American Chemical Society - Vol. 60 (1938) - S. Brunauer, P.H. Emmet, E. Teller "Adsorption of Gases in Multimolecular Layers" - pages 309 à 319).

## Revendications

1. Procédé de fabrication de perborate de sodium monohydraté par déshydratation d'un lit de perborate de sodium tétrahydraté dans un courant d'air, caractérisé en ce qu'on met en oeuvre un courant d'air qui est d'abord humide dans une première phase de la déshydratation, puis sec dans une deuxième phase de la déshydratation, l'humidité absolue de l'air dans la deuxième phase étant inférieure à celle de la première phase, ledit procédé étant mis en oeuvre dans une succession de deux réacteurs en série dont le premier est alimenté avec un air plus humide et le suivant avec l'air sec.

2. Procédé selon la revendication 1, caractérisé en ce que l'on met en oeuvre pour l'air sec, de l'air ambiant présentant une humidité relative comprise entre 40 et 100 % dans les conditions normales de température et de pression atmosphérique.

3. Procédé selon la revendication 1 ou 2, caractérisé en ce qu'on règle la teneur en humidité de l'air mis en oeuvre, pour que l'humidité relative de l'air à la sortie du lit soit comprise entre 15 et 80 % à la première phase de la déshydratation et entre 10 et 60 % à la deuxième phase, l'humidité relative de l'air provenant de la première phase étant supérieure à celle de l'air provenant de la deuxième phase.

4. Procédé selon l'une quelconque des revendications 1 à 3, caractérisé en ce que la durée de la première phase de la déshydratation est comprise entre 2 et 50 % de la durée totale de la déshydratation.

5. Procédé selon l'une quelconque des revendications 1 à 4, caractérisé en ce que la température de l'air que l'on introduit dans le lit est identique dans les deux phases de la déshydratation, de manière que la température du lit dans la première phase de la déshydratation soit supérieure à celle qu'il a dans la deuxième phase.

6. Procédé selon la revendication 5, caractérisé en ce qu'on règle la température et l'humidité de l'air à l'entrée du lit, pour que la différence entre les températures du lit dans la première phase et dans la deuxième phase de la déshydratation soit comprise entre 1 et 10°C.

7. Procédé selon l'une quelconque des revendications 5 ou 6, caractérisé en ce que la température du lit dans la première phase de la déshydratation est au maximum égale à la température de fusion du perborate de sodium.

8. Procédé selon la revendication 7, caractérisé en ce que la température du lit est comprise entre 52 et 62 ° C dans la première phase de la déshydratation et entre 50 et 60°C dans la deuxième phase.

9. Procédé selon l'une quelconque des revendications 1 à 8, caractérisé en ce qu'on met en oeuvre du perborate de sodium tétrahydraté qui présente un indice de résistance à l'attrition, selon la norme ISO 5937, qui n'excède pas 4,5 %.

10. Perborate de sodium monohydraté partiellement cristallisé, qui présente une teneur en matière amorphe au maximum égale à 60 % en poids, un taux d'usure à l'attrition, selon la norme ISO 5937, égale à 10% au maximum et une stabilité correspondant à une perte pondérale en oxygène actif inférieure à 60 % de sa teneur d'origine, après 50 jours de stockage dans de l'air ambiant à 55 ° C.

11. Perborate de sodium monohydraté selon la revendication 10, caractérisé en ce que sa teneur en matière amorphe est comprise entre 20 et 60 %, sa teneur originelle en oxygène actif est comprise entre 150 et 160 g par kg, son taux d'usure à l'attrition est compris entre 2 et 8 % et sa stabilité correspond à une perte pondérale en oxygène actif comprise entre 20 et 55 % après 50 jours de stockage dans de l'air ambiant à 55°C.

12. Perborate de sodium selon la revendication 10 ou 11, caractérisé en ce que sa surface spécifique est comprise entre 4 et 8 m²/g.

13. Poudres à lessiver des textiles, contenant du perborate de sodium monohydraté conforme à l'une quelconque des revendications 10 à 12.

## Patentansprüche

1. Verfahren zur Herstellung von Natriumperborat-monohydrat durch Dehydratisierung eines Bettes von Natriumperborat-tetrahydrat in einem Luftstrom, dadurch gekennzeichnet, daß man einen Luftstrom einsetzt, der zuerst feucht ist in einer ersten Stufe der Dehydratisierung, dann trocken in einer zweiten Stufe der Dehydratisierung, wobei die absolute Feuchtigkeit der Luft in der zweiten Stufe kleiner ist als die der ersten Stufe, und daß obiges Verfahren eingesetzt wird in einer Aufeinanderfolge von zwei Reaktoren in Serie, von denen der erste mit feuchterer Luft und der folgende mit trockener Luft gespeist wird.

2. Verfahren nach Anspruch 1, dadurch gekennzeichnet, daß man für die trockene Luft Umgebungsluft einsetzt, die eine relative Feuchtigkeit zwischen 40 und 100 % unter normalen Bedingungen von Temperatur und atmosphärischem Druck aufweist.

3. Verfahren nach Anspruch 1 oder 2, dadurch gekennzeichnet, daß man den Feuchtigkeitsgehalt der eingesetzten Luft derart regelt, daß die relative Feuchtigkeit der Luft am Ausgang des Bettes zwischen 15 und 80 % in der ersten Stufe der Dehydratisierung und zwischen 10 und 60 % in der zweiten Stufe beträgt, wobei die relative Feuchtigkeit der aus der ersten Stufe stammenden Luft größer ist als die der aus der zweiten Stufe stammenden Luft.

4. Verfahren nach einem der Ansprüche 1 bis 3, dadurch gekennzeichnet, daß die Dauer der ersten Stufe der Dehydratisierung zwischen 2 und 50 % der Gesamtdauer der Dehydratisierung beträgt.

5. Verfahren nach einem der Ansprüche 1 bis 4, dadurch gekennzeichnet, daß die Temperatur der Luft, die man in das Bett einführt, identisch ist in den beiden Stufen der Dehydratisierung, derart, daß die Temperatur des Bettes in der ersten Stufe der Dehydratisierung größer ist als die, die sie in der zweiten Stufe aufweist.

6. Verfahren nach Anspruch 5, dadurch gekennzeichnet, daß man die Temperatur und die Feuchtigkeit der Luft am Eingang des Bettes regelt, damit der Unterschied zwischen den Temperaturen des Bettes in der ersten Stufe und der zweiten Stufe der Dehydratisierung zwischen 1 und 10°C beträgt.

7. Verfahren nach einem der Ansprüche 5 oder 6, dadurch gekennzeichnet, daß die Temperatur des Bettes in der ersten Stufe der Dehydratisierung maximal gleich der Schmelztemperatur des Natriumperborats ist.

8. Verfahren nach Anspruch 7, dadurch gekennzeichnet, daß die Temperatur des Bettes zwischen 52 und 62°C in der ersten Stufe der Dehydratisierung und zwischen 50 und 60°C in der zweiten Stufe beträgt.

9. Verfahren nach einem der Ansprüche 1 bis 8, dadurch gekennzeichnet, daß man Natriumperborat-tetrahydrat einsetzt, das eine Widerstandszahl gegen Abreibung gemäß der Norm ISO 5937 von nicht größer als 4,5 % aufweist.

10. Teilweise kristallisiertes Natriumperborat-monohydrat, das einen Gehalt an amorphem Material von maximal gleich 60 Gew.-%, einen Betrag des Abriebverschleißes gemäß der Norm ISO 5937 von maximal gleich 10 % und eine Stabilität entsprechend einem Gewichtsverlust von aktivem Sauerstoff kleiner als 60 % seines Ausgangsgehaltes nach 50 Tagen Lagerung in Umgebungsluft bei 55 °C aufweist.

11. Natriumperborat-monohydrat nach Anspruch 10, dadurch gekennzeichnet, daß sein Gehalt an amorphem Material zwischen 20 und 60 %, sein ursprünglicher Gehalt an aktivem Sauerstoff zwischen 150 und 160 g pro kg, sein Betrag des Abriebverschleißes zwischen 2 und 8 % beträgt und seine Stabilität einem Gewichtsverlust von aktivem Sauerstoff zwischen 20 und 55 % nach 50 Tagen Lagerung in Umgebungsluft bei 55 °C entspricht.

12. Natriumperborat nach Anspruch 10 oder 11, dadurch gekennzeichnet, daß seine spezifische Oberfläche zwischen 4 und 8 m²/g beträgt.

13. Textilwaschpulver, das Natriumperborat-monohydrat gemäß einem der Ansprüche 10 bis 12 enthält.

## Claims

1. Process for producing sodium perborate monohydrate by dehydration of a bed of sodium perborate tetrahydrate in a current of air, characterised in that a current of air is used which is initially damp in a first phase of dehydration, then dry in a second phase of dehydration, the absolute humidity of the air in the second phase being less than that of the first phase, the said process being used in a succession of two reactors in series, the first of which is fed with a more humid air and the following one with dry air.

2. Process according to Claim 1, characterised in that ambient air having a relative humidity of between 40 and 100 % under the standard conditions of temperature and atmospheric pressure, is used as the dry air.

3. Process according to Claim 1 or 2, characterised in that the humidity content of the air used is regulated, so that the relative humidity of the air at the outlet from the bed is between 15 and 80 % in the first phase of dehydration and between 10 and 60 % in the second phase, the relative humidity of the air which is provided in the first phase being greater than that of the air which is provided in the second phase.

4. Process according to any one of Claims 1 to 3, characterised in that the duration of the first phase of dehydration is between 2 and 50 % of the total duration of dehydration.

5. Process according to any one of Claims 1 to 4, characterised in that the temperature of the air which is introduced into the bed is the same in the two phases of dehydration, so that the temperature of the bed in the first phase of dehydration is greater than its temperature in the second phase.

6. Process according to Claim 5, characterised in that the temperature and the humidity of the air are regulated at the inlet to the bed, so that the difference between the temperatures of the bed in the first phase and in the second phase of dehydration is fixed between 1 and 10°C.

7. Process according to either of Claims 5 or 6, characterised in that the temperature of the bed in the first phase of dehydration is at most equal to the melting temperature of sodium perborate.

8. Process according to Claim 7, characterised in that the temperature of the bed is between 52 and 62°C in the first phase of dehydration and between 50 and 60°C in the second phase.

9. Process according to any one of Claims 1 to 8, characterised in that sodium perborate tetrahydrate is used having an index of resistance to attrition, according to the standard ISO 5937, not exceeding 4.5 %.

10. Partially crystallised sodium perborate monohydrate, which has a content of amorphous material of at most 60 % by weight, a degree of consumption by attrition, according to the standard ISO 5937, of at most 10 % and a stability corresponding to a weight loss of active oxygen less than 60 % of its original content, after 50 days of storage in ambient air at 55°C.

11. Sodium perborate monohydrate according to Claim 10, characterised in that its content of amorphous material is between 20 and 60 %, its original content of active oxygen is between 150 and 160 g per kg, its degree of consumption by attrition is between 2 and 8 % and its stability corresponds to a weight loss of active oxygen of between 20 and 55 % after 50 days of storage in ambient air at 55°C.

12. Sodium perborate according to Claim 10 or 11, characterised in that its specific surface area is between 4 and 8 m²/g.

13. Washing powders for textiles, containing sodium perborate monohydrate according to any one of Claims 10 to 12.
